# EUROPEAN PATENT APPLICATION

(11) **EP 4 626 065 A1**
(43) Date of publication of application: **01.10.2025**
(21) Application number: 23910459.9
(22) Date of filing: 25.12.2023
(51) Int. Cl.: H04W 24/08

(54) **COMMUNICATION METHOD AND APPARATUS**

(30) Priority: 30.12.2022 CN 202211731126
(71) Applicant: Huawei Technologies Co., Ltd., Shenzhen, Guangdong 518129 (CN)
(72) Inventor: SENG, Shuming, Shenzhen, Guangdong 518129 (CN); LI, Chenwan, Shenzhen, Guangdong 518129 (CN); LU, Zhenwei, Shenzhen, Guangdong 518129 (CN); CHEN, Lei, Shenzhen, Guangdong 518129 (CN)
(74) Representative: Körber, Martin Hans
(86) International application number: PCT/CN2023/141450
(87) International publication number: WO 2024/140533

(57) **Abstract**

This application relates to the field of communication technologies, and provides a communication method and apparatus. The method includes: A first network device sends at least one reference signal to a second network device, to receive a measurement result of the second network device on the at least one reference signal; and the first network device determines, based on the measurement result, at least one resource for communication with at least one terminal device. According to the method, the first network device determines, by using the measurement result of the second network device on the reference signal, the resource used for communication between the first network device and the terminal device, thereby coordinating network behaviors of different network devices, avoiding a conflict between resources used by different network devices, improving network reliability, and improving communication performance.

## Description

### CROSS-REFERENCE TO RELATED APPLICATIONS

This application claims priority to Chinese Patent Application No. 202211731126.7, filed with the China National Intellectual Property Administration on December 30, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A passive radio frequency identification (radio frequency identification, RFID) system includes a reader and a tag device. The reader reads information in the tag device, or writes, into the tag device, information that needs to be stored in the tag device. Non-contact data communication is performed between the reader and the tag device. The tag device has a simple function, and needs excitation of the reader to send information. To be specific, the tag device converts a wireless signal sent by the reader into energy, and uses the energy to drive the tag device to operate.

If RFID is applied to a mobile communication system, for example, applied to a 5G system, a base station may serve as a reader to implement a function of the reader. When the base station serves as the reader, according to a procedure in the RFID system, readers operate independently of each other, that is, different base stations communicate with a tag device independently of each other. This operating mode is not suitable for a mobile communication system in a networking mode, thereby affecting communication performance.

### SUMMARY

This application provides a communication method and apparatus, to implement coordinated operating between different network devices, and improve communication performance.

According to a first aspect, this application provides a communication method. The method includes: A first network device sends at least one reference signal to a second network device; and the first network device receives a measurement result from the second network device, where the measurement result is determined based on the at least one reference signal, the measurement result is used to determine at least one resource, and the at least one resource is a resource for communication between the first network device and at least one terminal device.

According to the method, the first network device determines, by using the measurement result of the second network device on the reference signal, the resource used for communication between the first network device and the terminal device, thereby coordinating network behaviors of different network devices, avoiding a conflict between resources used by different network devices, improving network reliability, and improving communication performance.

In a possible implementation, the reference signal is a beacon beacon signal.

When an existing signal is reused as the reference signal, for example, when the reference signal is a beacon signal, an original function of the beacon signal may not be changed, and no additional resource is occupied. In this way, a plurality of functions can be implemented by using one signal, thereby improving system compatibility and resource utilization.

In a possible implementation, the terminal device is an ambient internet of things ambient IoT device.

In a possible implementation, the terminal device is a passive device, a semi-passive device, a semi-active device, or an active device with limited energy storage.

In a possible implementation, the method further includes: The first network device sends first configuration information to the second network device, where the first configuration information includes at least one of the following information: start time of the reference signal; a period of the reference signal; duration of the reference signal; and a frequency of the reference signal.

The first configuration information is sent to the second network device, so that the second network device can determine a sending location of the first reference signal, and can receive the first reference signal at corresponding time and a corresponding frequency.

In a possible implementation, it is determined, based on the measurement result, that the at least one reference signal causes no interference to the second network device, and the at least one resource is a resource shared by the first network device and the second network device. For example, the first network device and the second network device use a same slot and a same frequency resource. Alternatively, it is determined, based on the measurement result, that the at least one reference signal causes interference to the second network device, and the at least one resource is orthogonal to a resource configured by the second network device.

Through selection of a shared resource, resource utilization can be improved without affecting communication quality. Through selection of an orthogonal resource, mutual interference between the first network device and the second network device can be avoided, thereby avoiding affecting communication quality.

In a possible implementation, the method further includes: The first network device sends a first message to a first terminal device through a first resource, where the first resource is a resource in the at least one resource, and the first terminal device is a device in the at least one terminal device.

In a possible implementation, the first message is at least one piece of signaling for performing inventory, positioning, sensing reporting, or target search on the first terminal device.

According to a second aspect, this application provides a communication method. The method includes: A third network device receives a measurement result from a first terminal device, where the measurement result is used to determine at least one resource, the measurement result is determined based on at least one reference signal from a second terminal device, the first terminal device is located in a first cell of the third network device, and the second terminal device is located in a second cell of a fourth network device; and the third network device sends resource indication information to the first terminal device, where the resource indication information indicates a second resource, and the second resource is in the at least one resource.

According to the method provided in this application, the third network device and the fourth network device determine, based on the measurement result of the reference signal, whether there is interference, so that the third network device can determine, based on the measurement result, a resource allocated to a terminal device in the first cell. For example, the third network device and the fourth network device use an orthogonal time domain resource and/or frequency domain resource. This can avoid mutual interference between the terminal device in the first cell and a terminal device in the second cell when the terminal device in the first cell communicates with a tag device, thereby coordinating network behaviors of different network devices, avoiding a conflict between resources used by different network devices, improving network reliability, and improving communication performance.

In a possible implementation, the second resource is used for communication between the first terminal device and a tag device.

In a possible implementation, the second resource is used to carry first signaling, and the first signaling is at least one piece of signaling for performing inventory, positioning, sensing reporting, or target search on the tag device.

In a possible implementation, the reference signal is a beacon beacon signal.

In a possible implementation, the method further includes: The third network device receives first information of the reference signal from the fourth network device; and the third network device sends the first information to the first terminal device, where the first information includes at least one of the following information:
an identifier of the second terminal device; start time of the reference signal; a period of the reference signal; duration of the reference signal; and a frequency of the reference signal.

In a possible implementation, the method further includes: The third network device sends second information to the first terminal device, where the second information includes at least one of the following information: identification information of the second terminal device; measurement start indication information, where the measurement start indication information indicates the first terminal device to start to measure the reference signal; and measurement time information, where the measurement time information indicates at least one of start time, end time, and duration of measuring the reference signal.

In a possible implementation, the method further includes: The third network device sends third information to the first terminal device, where the third information includes at least one of the following: a reporting condition of the measurement result; a reporting period of the measurement result; a measurement quantity of the measurement result; the identification information of the second terminal device; and a quantity of reference signals corresponding to the measurement result.

In a possible implementation, that the at least one reference signal causes no interference to the first terminal device is determined based on the measurement result, and the at least one resource is a resource shared by the third network device and the fourth network device; or that the at least one reference signal causes interference to the first terminal device is determined based on the measurement result, and the at least one resource is orthogonal to a resource configured by the fourth network device for a terminal device in the second cell.

According to a third aspect, this application provides a communication method. The method includes: A first terminal device measures at least one reference signal from a second terminal device, to obtain a measurement result, where the measurement result is used to determine at least one resource.

The first terminal device sends the measurement result to a third network device, where the first terminal device is located in a first cell of the third network device, and the second terminal device is located in a second cell of a fourth network device.

The first terminal device receives resource indication information from the third network device, where the resource indication information indicates a second resource, and the second resource is in the at least one resource.

In a possible implementation, the second resource is used for communication between the first terminal device and a tag device.

In a possible implementation, the second resource is used to carry first signaling, and the first signaling is at least one piece of signaling for performing inventory, positioning, sensing reporting, or target search on the tag device.

In a possible implementation, the reference signal is a beacon beacon signal.

In a possible implementation, the method further includes: The first terminal device receives first information from the third network device, where the first information includes at least one of the following information: an identifier of the second terminal device, start time of the reference signal, a period of the reference signal, duration of the reference signal, and a frequency of the reference signal.

In a possible implementation, the method further includes: The first terminal device receives second information from the third network device, where the second information includes at least one of the following information: identification information of the second terminal device; measurement start indication information, where the measurement start indication information indicates the first terminal device to start to measure a reference signal between terminal devices; and measurement time information, where the measurement time information indicates at least one of start time, end time, and duration of measuring the reference signal.

In a possible implementation, the method further includes: The first terminal device receives third information from the third network device, where the third information includes at least one of the following: a reporting condition of the measurement result; a reporting period of the measurement result; a measurement quantity of the measurement result; the identification information of the second terminal device; and a quantity of reference signals corresponding to the measurement result.

In a possible implementation, that the at least one reference signal causes no interference to the first terminal device is determined based on the measurement result, and the at least one resource is a resource shared by the third network device and the fourth network device; or that the at least one reference signal causes interference to the first terminal device is determined based on the measurement result, and the at least one resource is orthogonal to a resource configured by the fourth network device for a terminal device in the second cell.

According to a fourth aspect, this application provides a communication method. The method includes: A first terminal device determines a measurement result, where the measurement result is obtained by measuring at least one reference signal in a third cell, the third cell is a neighboring cell of a fourth cell in which the first terminal device is located, and the measurement result is used to determine at least one resource; and the first terminal device sends the measurement result to a network device.

In a possible implementation, the measurement result is obtained by the first terminal device by measuring the at least one reference signal in the third cell in a process of performing cell selection, cell reselection, or reader selection in the fourth cell.

In a possible implementation, that the first terminal device sends the measurement result to the network device includes: The first terminal device sends the measurement result to the network device by using a MAC message; or the first terminal device sends the measurement result to the network device by using an RRC message.

According to a fifth aspect, this application provides a communication method. The method includes: A network device receives a measurement result from a first terminal device, where the measurement result is obtained by measuring at least one reference signal in a third cell, the third cell is a neighboring cell of a fourth cell in which the first terminal device is located, and the measurement result is used to determine at least one resource; and the network device sends resource indication information to a second terminal device, where the resource indication information indicates a third resource, and the third resource is a resource in the at least one resource.

In a possible implementation, the measurement result is obtained by the first terminal device by measuring the at least one reference signal in the third cell in a process of completing cell selection, cell reselection, or reader selection in the fourth cell.

According to a sixth aspect, this application further provides a communication apparatus. The communication apparatus implements any method provided in any one of the first aspect to the fifth aspect. The communication apparatus may be implemented by hardware, or may be implemented by executing corresponding software by hardware. The hardware or the software includes one or more units or modules corresponding to the foregoing function.

In a possible implementation, the communication apparatus includes a processor. The processor is configured to support the communication apparatus in performing a corresponding function of the communication device or the terminal device in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a terminal device.

In a possible implementation, the communication apparatus includes corresponding functional modules configured to implement the steps in the foregoing method. The function may be implemented by hardware, or may be implemented by executing corresponding software by hardware. The hardware or the software includes one or more modules corresponding to the foregoing function.

In a possible implementation, a structure of the communication apparatus includes a processing unit and a communication unit. These units may perform corresponding functions in the foregoing method examples. For details, refer to descriptions in the method provided in any one of the first aspect to the fifth aspect. Details are not described herein.

According to a seventh aspect, a communication apparatus is provided, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the first aspect to the fifth aspect and any possible implementation of any aspect by using a logic circuit or by executing code instructions.

According to an eighth aspect, a communication apparatus is provided, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement a functional module for the method according to any one of the first aspect to the fifth aspect and any possible implementation of any aspect by using a logic circuit or by executing code instructions.

According to a ninth aspect, a computer-readable storage medium is provided. The computer-readable storage medium stores a computer program or instructions. When the computer program or the instructions are executed by a processor, the method according to any one of the first aspect to the fifth aspect and any possible implementation of any aspect is implemented.

According to a tenth aspect, a computer program product storing instructions is provided. When the instructions are run by a processor, the method according to any one of the first aspect to the fifth aspect and any possible implementation of any aspect is implemented.

According to an eleventh aspect, a chip system is provided. The chip system includes a processor, may further include a memory, and is configured to implement the method according to any one of the first aspect to the fifth aspect and any possible implementation of any aspect. The chip system may include a chip, or may include a chip and another discrete component.

According to a twelfth aspect, a communication system is provided. The system includes an apparatus configured to implement the method provided in the second aspect and an apparatus configured to implement the method provided in the third aspect.

According to a thirteenth aspect, a communication system is provided. The system includes an apparatus configured to implement the method provided in the fourth aspect and an apparatus configured to implement the method provided in the fifth aspect.

### BRIEF DESCRIPTION OF DRAWINGS

FIG. 1 is a diagram of a communication system applicable to an embodiment of this application;
FIG. 2 is a diagram of a communication system applicable to an embodiment of this application;
FIG. 3 is a diagram of a communication system applicable to an embodiment of this application;
FIG. 4 is a diagram of a communication system applicable to an embodiment of this application;
FIG. 5 is a schematic flowchart of a communication method according to an embodiment of this application;
FIG. 6 is a schematic flowchart of a communication method according to an embodiment of this application;
FIG. 7 is a schematic flowchart of a communication method according to an embodiment of this application;
FIG. 8 is a diagram of a structure of a communication apparatus according to an embodiment of this application; and
FIG. 9 is a diagram of a structure of a communication apparatus according to an embodiment of this application.

### DESCRIPTION OF EMBODIMENTS

The following describes technical solutions in embodiments of this application with reference to the accompanying drawings in embodiments of this application. It is clear that the described embodiments are merely some but not all of embodiments of this application. In this application, the terms "first" and "second" and corresponding term numbers are intended to distinguish between similar objects but do not necessarily describe a specific order or sequence. It should be understood that the terms used in such a way are interchangeable in proper circumstances. This is merely a discrimination manner that is used when objects having a same attribute are described in embodiments of this application. In addition, the terms "include", "have", and any variants thereof are intended to cover non-exclusive inclusion, so that a process, method, system, product, or device including a series of units is not necessarily limited to those units, but may include other units that are not clearly listed or are inherent to the process, method, product, or device.

The method provided in embodiments of this application may be applied to various mobile communication systems, for example, the internet of things (internet of things, IoT), the narrowband internet of things (narrowband internet of things, NB-IoT), a 4th generation (4th generation, 4G) communication system (for example, long term evolution (long term evolution, LTE)), a 5th generation (5th generation, 5G) communication system (for example, 5G new radio (new radio, NR)), an LTE and NR hybrid architecture, or a new communication system emerging in 6G or future communication development. Alternatively, the communication system may include a machine-to-machine (machine-to-machine, M2M) network, a machine type communication (machine type communication, MTC) network, or another network. For example, the method provided in embodiments of this application may be applied to a communication system including a reader and a tag.

The method and apparatus provided in embodiments of this application are based on a same technical concept or similar technical concepts. Because problem-resolving principles of the method and the apparatus are similar, mutual reference may be made to implementations of the apparatus and the method. Repeated parts are not described.

The following first describes some terms in embodiments of this application, to facilitate understanding of a person skilled in the art.

### Radio frequency identification (radio frequency identification, RFID) system:

The RFID system usually includes a reader (reader) and a tag (tag) device. The reader may exchange information with the tag device, to manage the tag device. The tag device may also be referred to as an electronic tag device or an RFID tag device, is a micro wireless transceiver apparatus, and mainly includes a built-in tag device antenna, a coupling element, and a chip. The chip of the tag device has storage space capable of supporting the reader in reading or writing data of the tag device. After receiving, through the antenna, a radio frequency signal sent by the reader, the tag device may implement coupling on the radio frequency signal by using the coupling element, so that energy can be provided for the chip of the tag device within a coupling channel, and data stored in the chip can be fed back to the reader through the antenna. A communication network that is based on a cellular network infrastructure and that includes a reader and a tag device may be referred to as a passive (passive) internet of things (internet of things, IoT) network or an ambient internet of things (ambient IoT), where the tag device may also be considered as a terminal device, and may be an active tag device, a passive tag device, or a semi-active tag device.

The RFID system may be applied to a passive or semi-passive IoT scenario. For example, in a logistics and warehousing scenario, the tag device may be used to inventory and track goods, and perform status monitoring on the goods in a goods transportation process. For another example, in an industrial manufacturing scenario, the tag device may be used to perform environment monitoring and device status monitoring.

In the RFID system, the following operations may be performed between the tag device and the reader.

Inventory operation: The inventory operation may also be referred to as a counting operation, and the operation can obtain identification information of the tag device. For example, the reader may obtain the identification information of the tag device by using a command such as a query (query) command or an acknowledgement (acknowledgement, ACK) command. To facilitate counting of the tag device, the tag device includes four types of session (session) identifiers S0 to S3 in total, and each type of session identifier corresponds to two types of inventory states: A and B. The inventory state is indicated by an inventory flag bit (sessInventoried flag). When the reader selects a tag device, a select (select) command sent to the tag device carries a session identifier, and the tag device stores the session identifier. When the reader performs an inventory operation on the tag device, a query command sent to the tag device includes the session identifier. In this case, the tag device may toggle an inventory state corresponding to the session identifier from A to B. If the reader sends a query command again to perform an inventory operation, because the inventory state in the tag device is B, the tag device does not respond to the reader, thereby avoiding that the same tag device is inventoried a plurality of times in one inventory period.

Read (read) operation: The read operation can read an electronic product code (electronic product code, EPC) in a storage area of the tag device, a tag device identifier (tag identifier, TID), content stored in a reserved area of the tag device, content stored in a user storage area, or the like.

Write (write) operation: The write operation can be performed on the storage area of the tag device.

Kill (kill) operation: The kill operation can make the tag device permanently incapable of operating.

Lock (lock) operation: The lock operation can lock information about the tag device, and can prevent a read operation or a write operation on the tag device. Alternatively, the lock operation can lock the storage area, and can prevent or allow a read operation or a write operation on the storage area.

The foregoing is merely an example. Other types of operations, such as a block write operation or a block erase operation, are further included between the reader and the tag device. For details, refer to related descriptions of the RFID system, and details are not described herein again.

In this application, for commands such as a query command, a query respond command, a select command, query adjust (query adjust), and query repeat that appear below, refer to descriptions of related commands in the RFID system unless otherwise specified.

A passive device is a device that can operate normally without relying on an external power supply. For example, a tag device in an RFID system may receive a radio frequency signal sent by a reader, and convert a part of the radio frequency signal into electric energy, so as to drive, by using the electric energy, the tag device to operate.

Semi-passive device: The semi-passive device may also be referred to as a semi-active device. The semi-passive device may include a power supply, but the power supply may supply power to only some modules in the device, for example, supply power to a part that maintains data in the device. Therefore, power consumption is relatively low, and power supply can be maintained for a long time. When operating normally, the semi-passive device also needs to convert a radio frequency signal into electric energy, so as to operate by using the electric energy.

Active device with limited energy storage: Such a device is an active device, but can store specific energy compared with an active device. Such a device can store energy into a capacitor, and an energy storage level may be typically a level of hundreds of millifarads.

In this application, a terminal device is also referred to as user equipment (user equipment, UE), a mobile station (mobile station, MS), a mobile terminal (mobile terminal, MT), or the like. The terminal device is a device having a wireless communication function (providing voice/data connectivity for a user), or may be an ambient IoT device, or may be a tag device, or may be a reader or a device having a reader function, for example, a handheld device, a vehicle-mounted device, or a vehicle-mounted module that has a wireless connection function. Currently, some examples of the terminal device are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in the internet of vehicles, a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), a device-to-device (device-to-device, D2D) communication terminal device, a vehicle-to-everything (vehicle-to-everything, V2X) communication terminal device, a smart vehicle, an in-vehicle infotainment system (or referred to as an in-vehicle communication unit) (telematics box, T-box), a machine-to-machine/machine type communication (machine-to-machine/machine type communication, M2M/MTC) terminal device, an internet of things (internet of things, IoT) terminal device, and the like. For example, the terminal device may be a vehicle-mounted device, a vehicle device, a vehicle-mounted module, a vehicle, an on board unit (on board unit, OBU), a roadside unit (roadside unit, RSU), a T-box, a chip, or a system on chip (system on chip, SoC).

In this application, a tag device may be a tag device in an RFID system, or may be an ambient IoT device, or may be an internet of things device that has limited energy storage or has no energy storage or energy harvesting capability.

In this application, a network device may be radio access devices in various standards, for example, may be a next generation NodeB (next Generation NodeB, gNB) in an NR system, an evolved NodeB (evolved NodeB, eNB), a radio network controller (radio network controller, RNC) or a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission and reception point (transmission and reception point, TRP), a transmission point (transmission point, TP), or the like, or may be a gNB or a transmission point (TRP or TP) in a 5G (NR) system, or one antenna panel or a group of antenna panels (including a plurality of antenna panels) of a base station in a 5G system, or may be a network node that forms a gNB or a transmission point, for example, a baseband unit, or a DU in a central unit-distributed unit (central unit-distributed unit, CU-DU) architecture.

In some implementations, the network device may include a central unit (central unit, CU) and a distributed unit (distributed unit, DU). The RAN device including the CU node and the DU node separates protocol layers of a gNB in an NR system. Functions of some protocol layers are controlled by the CU in a centralized manner. Functions of some or all remaining protocol layers are distributed in the DU, and the CU controls the DU in a centralized manner. Further, the CU may be further divided into a control plane (CU-CP) and a user plane (CU-UP). The CU-CP is responsible for a control plane function, mainly including radio resource control (radio resource control, RRC) and a packet data convergence protocol (packet data convergence protocol, PDCP) corresponding to the control plane (that is, PDCP-C). The PDCP-C is mainly responsible for encryption and decryption of control plane data, integrity protection, data transmission, and the like. The CU-UP is responsible for a user plane function, mainly including a service data adaptation protocol (service data adaptation protocol, SDAP) and a PDCP corresponding to the user plane (that is, PDCP-U). The SDAP is mainly responsible for processing data of a core network and mapping a flow (flow) to a bearer. The PDCP-U is mainly responsible for encryption and decryption of a data plane, integrity protection, header compression, sequence number maintenance, data transmission, and the like. The CU-CP and the CU-UP are connected through an E1 interface. The CU-CP, on behalf of the gNB, is connected to the core network through an NG interface and connected to the DU through an F1 interface-control plane (namely, F1-C). The CU-UP is connected to the DU through an F1 interface-user plane (namely, F1-U). Certainly, in another possible implementation, the PDCP-C is alternatively on the CU-UP.

It may be understood that, in different systems, the CU (including the CU-CP or the CU-UP) or the DU may alternatively have different names, but a person skilled in the art can understand meanings of the names. For example, in an open radio access network (open radio access network, O-RAN) system, the CU may alternatively be referred to as an O-CU (open CU), the DU may alternatively be referred to as an O-DU, the CU-CP may alternatively be referred to as an O-CU-CP, and the CU-UP may alternatively be referred to as an O-CU-UP. For ease of description, the CU, the CU-CP, the CU-UP, and the DU are used as an example for description in this application. The network device may further include an active antenna unit (active antenna unit, AAU). The CU implements some functions of the gNB, and the DU implements some functions of the gNB. For example, the CU is responsible for processing a non-real-time protocol and service, to implement functions of an RRC layer. The DU is responsible for processing a physical layer protocol and a real-time service, and implementing functions of a radio link control (radio link control, RLC) layer, a medium access control (medium access control, MAC) layer, and a physical (physical, PHY) layer. In some deployments, the CU may be further divided into a central unit control plane (CU-CP) node and a central unit user plane (CU-UP) node. The CU-CP is responsible for a control plane function, and the CU-UP is responsible for a user plane function.

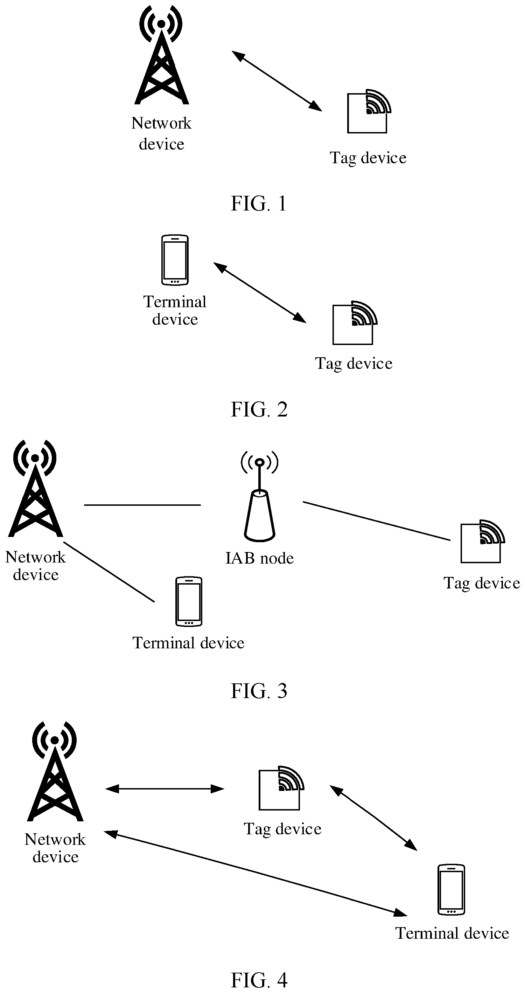

FIG. 1 is a diagram of a communication system applicable to an embodiment of this application. As shown in FIG. 1, the communication system includes a network device and a tag device. The tag device may be an independent device, or the tag device may be integrated with a terminal device, that is, the tag device is a part of the terminal device. In the communication system, the network device may have a function of a reader in an RFID system, that is, the network device may serve as the reader to communicate with the tag device.

FIG. 2 is a diagram of another communication system applicable to an embodiment of this application. As shown in FIG. 2, the communication system includes a terminal device and a tag device. The tag device may be an independent device, or the tag device may be integrated with the terminal device. In the communication system, the terminal device may have a function of a reader in an RFID system, that is, the terminal device may serve as the reader to communicate with the tag device. For example, the terminal device and the tag device may communicate with each other through a sidelink (sidelink, SL).

FIG. 3 is a diagram of another communication system applicable to an embodiment of this application. As shown in FIG. 3, the communication system includes a network device, an integrated access and backhaul (integrated access and backhaul, IAB) node, and a tag device. The communication system may further include another device, for example, include a device such as a terminal device. In the communication system, the network device may have a function of a reader in an RFID system, the IAB node may serve as a relay node between the network device and the tag device, the tag device transmits information to the IAB node, and the IAB node forwards the information to the network device through a Uu interface.

In this application, a communication system including a network device, a terminal device, and a tag device may alternatively be a system of a separated architecture. In the communication system, as shown in FIG. 4, the network device and the terminal device may directly communicate with each other. The network device may further have a function of a reader in an RFID system. An uplink connection exists between the tag device and the network device, and a downlink connection exists between the tag device and the terminal device. The terminal device may transmit information to the tag device, and the tag device forwards the information to the network device. Alternatively, a downlink connection exists between the tag device and the network device, and an uplink connection exists between the tag device and the terminal device. The network device may transmit information to the tag device, and the tag device forwards the information to the terminal device. Energy required by the tag device to send the information may be provided by an excitation signal, and the excitation signal may be from the network device or the terminal device.

If RFID is applied to a mobile communication system, for example, applied to a 5G system, a network device may serve as a reader to implement a function of the reader. According to a procedure in the RFID system, readers operate independently of each other, that is, different network devices communicate with a tag device independently of each other. This operating mode affects communication performance. For example, if a resource used when a first network device communicates with a first tag device overlaps a resource used when a second network device communicates with a second tag device, the two devices interfere with each other. Therefore, this application provides a method, to coordinate network behaviors of different network devices, improve network reliability, and improve communication performance.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

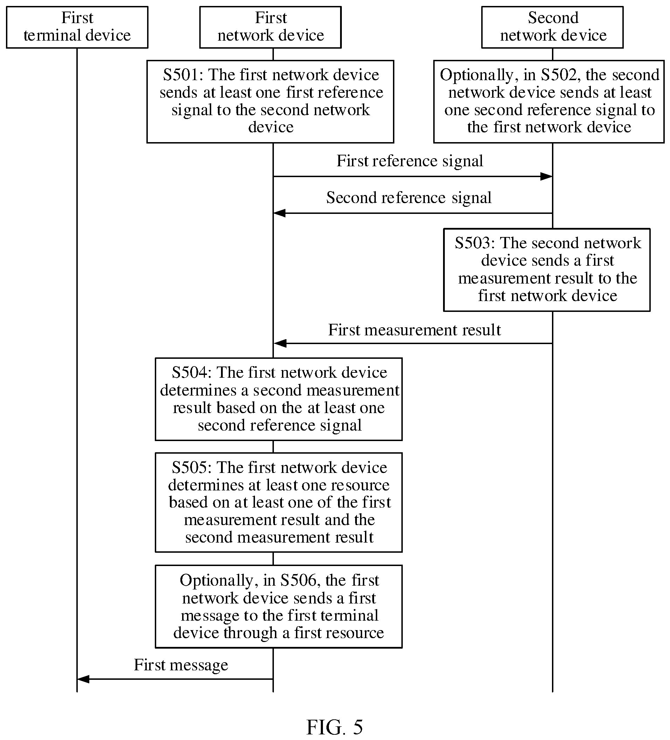

FIG. 5 is a schematic flowchart of a communication method according to an embodiment of this application. When a procedure of the method is applied to the system shown in FIG. 1 to FIG. 4, the network device in FIG. 1 to FIG. 4 may perform a method performed by a first network device or a second network device in the following procedure, the terminal device in FIG. 1 to FIG. 4 may perform a method performed by a terminal device in the following procedure, and the tag device in FIG. 1 to FIG. 4 may perform a method performed by a tag device in the following procedure. It may be understood that a specific structure of an execution body of a method provided in embodiments of this application is not specifically limited in embodiments shown below, provided that a program that records code for the method provided in embodiments of this application can be run to perform communication according to the method provided in embodiments of this application.

In the procedure shown in FIG. 5, a first network device and a second network device may serve as readers to communicate with a tag device, and a terminal device may serve as the tag device.

S501: The first network device sends at least one first reference signal to the second network device. Correspondingly, the second network device receives the at least one first reference signal from the first network device.

Optionally, in S502, the second network device sends at least one second reference signal to the first network device. Correspondingly, the first network device receives the at least one second reference signal from the second network device.

S502 is an optional step, and may be performed or may not be performed. This is not limited in this application.

In this application, a specific type of the reference signal is not limited. The reference signal may be a specially designed signal, or an existing signal may be reused as the reference signal. For example, the reference signal may be any one of the following signals:
a beacon (beacon) signal; a sensing signal; a synchronization signal; a system message; a paging message; a select command in an RFID system; and a query command in the RFID system.

If the existing signal is reused as the reference signal, an original function of the reference signal may not be changed, and no additional resource is occupied. In this way, a plurality of functions can be implemented by using one signal, thereby improving system compatibility and resource utilization.

In this application, a function of the foregoing signal is not limited. For example, for the beacon signal, the beacon signal indicates frequency information to the tag device, may be used by the tag device to perform frequency correction based on the frequency information, and is periodically sent.

Before S501, in an implementation, the first network device may send first configuration information to the second network device, where the first configuration information is a sending configuration of the first reference signal. For example, the first configuration information includes at least one of the following information:
start time of the first reference signal, which may indicate start sending time of the at least one first reference signal, where for example, the start time may be a specific time value of a first reference signal that is first sent, or may be a frame number of a frame in which the first reference signal that is first sent is located; a period of the first reference signal, which may indicate a sending period of the at least one first reference signal; duration of the first reference signal, which may indicate duration of the at least one first reference signal; and a frequency of the first reference signal, which may indicate frequency domain information of the at least one first reference signal.

The second network device may determine a sending location of the first reference signal based on the first configuration information, so as to receive the first reference signal at corresponding time and a corresponding frequency.

If the first network device does not send the first configuration information, the first configuration information may be preset in a protocol, or the second network device receives the first reference signal in a blind detection manner.

Similarly, before S502, in an implementation, the second network device may send second configuration information to the first network device, where the second configuration information is a sending configuration of the second reference signal. For example, the second configuration information includes at least one of the following information:
start time of the second reference signal, which may indicate start sending time of the at least one second reference signal; a period of the second reference signal, which may indicate a sending period of the at least one second reference signal; duration of the second reference signal, which may indicate duration of the at least one second reference signal; and a frequency of the second reference signal, which may indicate frequency domain information of the at least one second reference signal.

The first network device may determine a sending location of the second reference signal based on the second configuration information, so as to receive the second reference signal at corresponding time and a corresponding frequency.

If the second network device does not send the second configuration information, the second configuration information may be preset in a protocol, or the first network device receives the second reference signal in a blind detection manner.

S503: The second network device sends a first measurement result to the first network device. Correspondingly, the first network device receives the first measurement result from the second network device.

The first measurement result is determined based on the at least one first reference signal. For example, the first measurement result includes measurement values of one or more first reference signals. The measurement value may be reference signal received power (reference signal received power, RSRP), reference signal received quality (reference signal received quality, RSRQ), a received signal strength indicator (received signal strength indicator, RSSI), or the like of the first reference signal. This is not limited in this application. The second network device may determine, based on the first measurement result, a level of interference caused by the first network device to the second network device. For example, higher RSRP of the first reference signal at a receive end of the second network device indicates greater interference caused by the first reference signal to the second network device.

Optionally, in S504, the first network device determines a second measurement result based on the at least one second reference signal.

For example, the second measurement result includes measurement values of one or more second reference signals.

Optionally, in S505, the first network device determines at least one resource based on at least one of the first measurement result and the second measurement result.

The at least one resource is a resource for communication between the first network device and at least one terminal device. The terminal device may be a passive device or a semi-passive device. For example, the terminal device is a tag device, or the terminal device is a device having a function of the tag device. The terminal device may alternatively be an active device with limited energy storage.

In another implementation, the first network device may send the second measurement result to the second network device, and the second network device determines at least one resource based on at least one of the first measurement result and the second measurement result.

In this application, the resource determined by the first network device or the second network device may be a time domain resource, or may be a frequency domain resource. This is not limited in this application.

How the first network device specifically determines the at least one resource is not limited in this application. In a possible implementation, if it is determined, based on the first measurement result, that the at least one first reference signal causes no interference to the second network device, and it is determined, based on the second measurement result, that the at least one second reference signal causes no interference to the first network device, the resource used by the first network device and the resource used by the second network device may be the same. For example, a same subcarrier and a same slot are used for communication. In this case, the at least one resource may be a resource shared by the first network device and the second network device, or the at least one resource may be used by the first network device and may also be used by the second network device. In this way, resource utilization is improved, and communication quality is not affected. In this case, the resource used by the first network device may alternatively be different from the resource used by the second network device. This is not limited in this application.

In another possible implementation, if it is determined, based on the first measurement result, that the at least one first reference signal causes interference to the second network device, and it is determined, based on the second measurement result, that the at least one second reference signal causes interference to the first network device, the resource used by the first network device and the resource used by the second network device cannot be the same, or the resource used by the first network device and the resource used by the second network device are orthogonal. For example, communication cannot be performed by using a same subcarrier, or communication can be performed by using a same subcarrier but cannot be performed by using a same slot. In this case, the at least one resource determined by the first network device is orthogonal to the resource configured by the second network device, or the at least one resource is a resource different from the resource configured by the second network device. Alternatively, a connection between the first network device and a first terminal device is released, to avoid mutual interference between the first network device and the second network device, thereby avoiding affecting communication quality.

In this implementation, the first network device may indicate the at least one resource to the second network device, so that when performing resource configuration, the second network device avoids using the at least one resource, or configures a resource that is orthogonal to the at least one resource.

In this implementation, the second network device may also indicate, to the first network device, the resource configured by the second network device, so that the first network device determines at least one resource different from the resource configured by the second network device, or at least one resource orthogonal to the resource configured by the second network device.

In this application, there may be a plurality of implementations for determining, based on a measurement result, whether there is interference. The first measurement result is used as an example. It is assumed that the first measurement result includes at least one measurement value. In a possible implementation, if an average value of the at least one measurement value is greater than a first threshold, it may be determined that the at least one first reference signal causes interference to the second network device; or if an average value of the at least one measurement value is less than or equal to a first threshold, it may be determined that the at least one first reference signal causes no interference to the second network device.

In another possible implementation, if a quantity of measurement values greater than a second threshold in the at least one measurement value is greater than a first quantity, it may be determined that the at least one first reference signal causes interference to the second network device; or if a quantity of measurement values greater than a second threshold in the at least one measurement value is less than or equal to a first quantity, it may be determined that the at least one first reference signal causes no interference to the second network device.

How to specifically determine the first threshold, the second threshold, and the first quantity is not limited in this application.

For a specific process in which the first network device determines, based on the second measurement result, whether there is interference, refer to the foregoing descriptions. Details are not described herein.

It is assumed that the first measurement result includes at least one first measurement value, and the second measurement result includes at least one second measurement value. In a possible implementation, if an average value of the at least one first measurement value is greater than a first threshold, and/or an average value of the at least one second measurement value is greater than the first threshold, it may be determined that the at least one first reference signal causes interference to the second network device; or if an average value of the at least one first measurement value is less than or equal to a first threshold, and an average value of the at least one second measurement value is less than or equal to the first threshold, it may be determined that the at least one first reference signal causes no interference to the second network device.

In another possible implementation, if a quantity of measurement values greater than a second threshold in the at least one first measurement value is greater than a first quantity, and/or a quantity of measurement values greater than the second threshold in the at least one second measurement value is greater than the first quantity, it may be determined that the at least one first reference signal causes interference to the second network device; or if a quantity of measurement values greater than a second threshold in the at least one measurement value is less than or equal to a first quantity, and a quantity of measurement values greater than the second threshold in the at least one second measurement value is less than or equal to the first quantity, it may be determined that the at least one first reference signal causes no interference to the second network device.

The foregoing is merely an example, and there may be another method for determining, based on a measurement result, whether there is interference. This is not limited in this application.

Optionally, in S506, the first network device sends a first message to the first terminal device through a first resource.

The first resource is a resource in the at least one resource, and the first terminal device is a device in the at least one terminal device.

In this application, a specific function of the first message is not limited. For example, the first message is at least one piece of signaling for performing inventory, positioning, sensing reporting, or target search on the first terminal device. For another example, the first message is any one of the following:
a query command; a query respond command; a select command; query adjust; query repeat; and downlink data.

According to the method provided in this application, the first network device and the second network device determine, based on a measurement result of a reference signal, whether there is interference, so that the first network device can determine, based on the measurement result, a resource used for communication with a terminal device, thereby coordinating network behaviors of different network devices, avoiding a conflict between resources used by different network devices, improving network reliability, and improving communication performance.

The method provided in this application is further applicable to a scenario in which a terminal device serves as a reader. For details, refer to the following procedure.

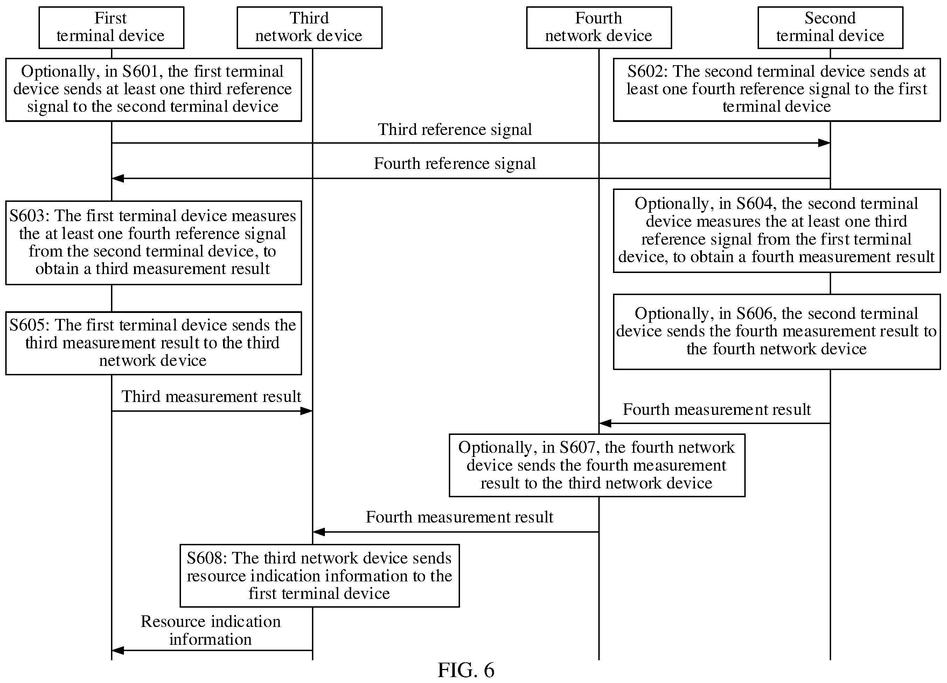

FIG. 6 is a schematic flowchart of a communication method according to an embodiment of this application. When a procedure of the method is applied to the system shown in FIG. 1 to FIG. 4, the network device in FIG. 1 to FIG. 4 may perform a method performed by a third network device or a fourth network device in the following procedure, the terminal device in FIG. 1 to FIG. 4 may perform a method performed by a first terminal device or a second terminal device in the following procedure, and the tag device in FIG. 1 to FIG. 4 may perform a method performed by a tag device in the following procedure.

In the procedure shown in FIG. 6, a first terminal device and a first terminal device may serve as readers, and may communicate with a tag device.

Optionally, in S601, the first terminal device sends at least one third reference signal to the second terminal device.

S602: The second terminal device sends at least one fourth reference signal to the first terminal device.

In this application, a specific type of the reference signal is not limited. The reference signal may be a specially designed signal, or an existing signal may be reused as the reference signal. For example, the reference signal may be any one of the following signals:
a beacon (beacon) signal; a sensing signal; a synchronization signal; a system message; a paging message; a select command in an RFID system; and a query command in the RFID system.

In an implementation, the first terminal device is located in a first cell of a third network device, and the second terminal device is located in a second cell of a fourth network device.

In an implementation, the first terminal device is located in the first cell, and the second terminal device is located in the second cell. The first cell and the second cell respectively belong to different remote radio units of the third network device.

In the following description, an example in which the first cell belongs to the third network device and the second cell belongs to the fourth network device is used for description. Other cases may be deduced by analogy.

An execution sequence of S601 and S602 is merely an example. The execution sequence of S601 and S602 may be determined based on an actual situation, and it is not necessarily required that S601 be performed before S602.

Before S602, the fourth network device may send first information to the third network device, and the third network device may forward the first information to the first terminal device. The first information is a sending configuration of the fourth reference signal. For example, the first information includes at least one of the following information:
start time of the fourth reference signal, which may indicate start sending time of the at least one fourth reference signal, where for example, the start time may be a specific time value of a fourth reference signal that is first sent, or may be a frame number of a frame in which the fourth reference signal that is first sent is located; a period of the fourth reference signal, which may indicate a sending period of the at least one fourth reference signal; duration of the fourth reference signal, which may indicate duration of the at least one fourth reference signal; and a frequency of the fourth reference signal, which may indicate frequency domain information of the at least one fourth reference signal.

The first terminal device may determine the sending configuration of the fourth reference signal based on the first information, so as to receive the fourth reference signal at corresponding time and a corresponding frequency.

If the fourth network device does not send the first information, the first information may be preset in a protocol, or the first terminal device receives the fourth reference signal in a blind detection manner.

Similarly, before S601, the fourth network device may send configuration information of the third reference signal to the second terminal device. For details, refer to the foregoing descriptions. Details are not described herein again.

Before S602, in an implementation, the third network device may further send second information to the first terminal device, where the second information includes at least one of the following information:
identification information of the second terminal device;
measurement start indication information, where the measurement start indication information indicates the first terminal device to start to measure the reference signal;
measurement time information, where the measurement time information indicates at least one of start time, end time, and duration of measuring the reference signal; and
measurement frequency information, where the measurement frequency information indicates a sending frequency of the reference signal; and optionally, if there is no measurement frequency information, it may be considered by default that the reference signal is sent at the same frequency.

The first terminal device may determine, by using the identification information of the second terminal device, that a reference signal sent by a specific terminal device needs to be received; the first terminal device may determine, by using the measurement start indication information, whether to start to measure the reference signal; and the first terminal device may determine, by using the measurement time information, time for starting to measure the reference signal and time for ending the measurement.

Similarly, the fourth network device may alternatively send information similar to the second information to the second terminal device. Details are not described herein.

S603: The first terminal device measures the at least one fourth reference signal from the second terminal device, to obtain a third measurement result.

The third measurement result may include at least one third measurement value, one third measurement value corresponds to one fourth reference signal, and the third measurement value may be RSRP, RSRQ, an RSSI, or the like.

Optionally, in S604, the second terminal device measures the at least one third reference signal from the first terminal device, to obtain a fourth measurement result.

The fourth measurement result may include at least one fourth measurement value, one fourth measurement value corresponds to one third reference signal, and the fourth measurement value may be RSRP, RSRQ, an RSSI, or the like.

An execution sequence of S603 and S604 is merely an example. The execution sequence of S603 and S604 may be determined based on an actual situation, and it is not necessarily required that S603 be performed before S604.

S605: The first terminal device sends the third measurement result to the third network device. Correspondingly, the third network device receives the third measurement result from the first terminal device.

Before S605, in an implementation, the third network device sends third information to the first terminal device, where the third information includes at least one of the following:
a reporting condition of the measurement result;
a reporting period of the measurement result;
a measurement quantity of the measurement result;
the identification information of the second terminal device; and
a quantity of reference signals corresponding to the measurement result.

The reporting condition may indicate that the first terminal device reports the measurement result only when the reporting condition is met, and the first terminal device may not report the measurement result when the reporting condition is not met. For example, the reporting condition may include: If an average value of measurement values in the measurement result is greater than a third threshold, the measurement result is reported; or if an average value of measurement values in the measurement result is less than or equal to a third threshold, the measurement result is not reported.

For another example, the reporting condition may include: If a quantity of measurement values greater than a fourth threshold in the measurement result is greater than a second quantity, the measurement result is reported; or if a quantity of measurement values greater than a fourth threshold in the measurement result is less than or equal to a second quantity, the measurement result is not reported. The foregoing is merely an example, and the reporting condition may be alternatively implemented in another manner. This is not limited in this application.

The measurement quantity may refer to a type of a measurement value in the measurement result, and the measurement quantity may be RSRP, RSRQ, an RSSI, or the like.

The quantity N of reference signals corresponding to the measurement result may indicate that the measurement result is determined based on at least N reference signals, that is, the first terminal device can report a corresponding measurement result only after measuring the at least N reference signals.

Similarly, the fourth network device may alternatively send information similar to the third information to the second terminal device. Details are not described herein.

Optionally, in S606, the second terminal device sends a fourth measurement result to the fourth network device.

Optionally, in S607, the fourth network device sends the fourth measurement result to the third network device. Correspondingly, the third network device receives the fourth measurement result from the fourth network device.

S608: The third network device sends resource indication information to the first terminal device. Correspondingly, the first terminal device receives the resource indication information from the third network device.

The resource indication information indicates a second resource, the second resource is in at least one resource, and the second resource is used for communication between the first terminal device and a tag device.

The at least one resource is determined by the third network device based on at least one of the third measurement result and the fourth measurement result, and the at least one resource is used for communication between a terminal device and a tag device. In this application, the resource determined by the third network device may be a time domain resource, or may be a frequency domain resource. This is not limited in this application.

In a possible implementation, if it is determined, based on the third measurement result, that the at least one fourth reference signal causes no interference to the first terminal device, and it is determined, based on the fourth measurement result, that the at least one third reference signal causes no interference to the second terminal device, a resource allocated by the third network device to a terminal device in the first cell may be the same as a resource allocated by the fourth network device to a terminal device in the second cell. In this case, the at least one resource may be a resource shared by the third network device and the fourth network device, or the at least one resource can be used by the terminal device in the first cell and can be used by the terminal device in the second cell. In this case, the resource allocated by the third network device to the terminal device in the first cell may alternatively be different from the resource allocated by the fourth network device to the terminal device in the second cell. This is not limited in this application.

In another possible implementation, if it is determined, based on the third measurement result, that the at least one fourth reference signal causes interference to the first terminal device, and it is determined, based on the fourth measurement result, that the at least one third reference signal causes interference to the second terminal device, a resource allocated by the third network device to a terminal device in the first cell cannot be the same as a resource allocated by the fourth network device to a terminal device in the second cell, or a resource allocated by the third network device to a terminal device in the first cell is orthogonal to a resource allocated by the fourth network device to a terminal device in the second cell. In this case, the at least one resource determined by the third network device is orthogonal to the resource configured by the fourth network device for the terminal device in the second cell, or the at least one resource is a resource different from the resource configured by the fourth network device for the terminal device in the second cell.

In this implementation, the third network device may indicate the at least one resource to the fourth network device, so that when performing resource configuration, the fourth network device avoids using the at least one resource, or configures a resource orthogonal to the at least one resource.

In this implementation, the fourth network device may also indicate, to the third network device, the resource configured by the fourth network device, so that the third network device determines at least one resource different from the resource configured by the fourth network device, or at least one resource orthogonal to the resource configured by the fourth network device.

In this application, there may be a plurality of implementations for determining, based on the measurement result, whether there is interference. For details, refer to the descriptions in S505. Details are not described herein again.

Optionally, the first terminal device sends first signaling to the tag device by using the second resource.

In this application, a specific function of the first signaling is not limited. For example, the first signaling is signaling used for inventory on the tag device. For another example, the first signaling is any one of the following:
a query command; a query respond command; a select command; query adjust; query repeat; and downlink data.

According to the method provided in this application, the third network device and the fourth network device determine, based on the measurement result of the reference signal, whether there is interference, so that the third network device can determine, based on the measurement result, the resource allocated to the terminal device in the first cell, to avoid mutual interference between the terminal device in the first cell and the terminal device in the second cell when the terminal device in the first cell communicates with the tag device, thereby coordinating network behaviors of different network devices, avoiding a conflict between resources used by different network devices, improving network reliability, and improving communication performance.

This application further provides a method. A terminal device sends, to a network device, a measurement result obtained in a process of completing cell selection/reselection/reader selection in an idle state, so that the network device can determine whether there is interference. For details, refer to the following procedure.

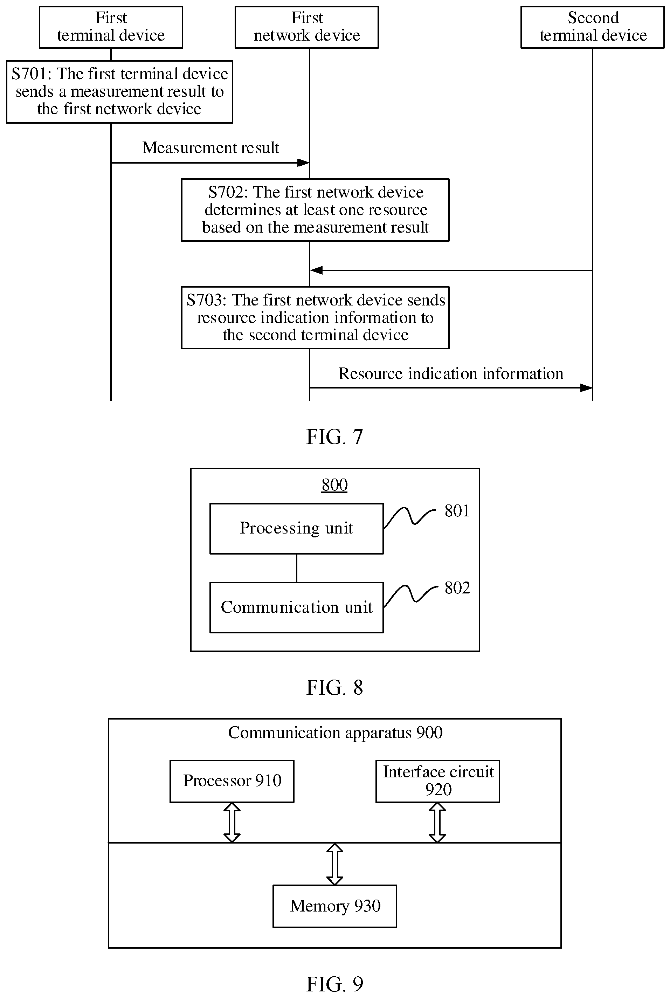

FIG. 7 is a schematic flowchart of a communication method according to an embodiment of this application.

When a procedure of the method is applied to the system shown in FIG. 1 to FIG. 4, the network device in FIG. 1 to FIG. 4 may perform a method performed by a first network device in the following procedure, the terminal device in FIG. 1 to FIG. 4 may perform a method performed by a first terminal device or a second terminal device in the following procedure, and the tag device in FIG. 1 to FIG. 4 may perform a method performed by a tag device in the following procedure.

In the procedure shown in FIG. 7, a first network device may serve as a reader, a first terminal device may serve as a tag device, and a second terminal device may serve as a reader.

S701: The first terminal device sends a measurement result to the first network device. Correspondingly, the first network device receives the measurement result from the first terminal device.

The measurement result is obtained by the first terminal device by measuring at least one reference signal in a third cell. Specifically, the measurement result is obtained by the terminal device by measuring the at least one reference signal in the third cell in a process of performing cell selection, cell reselection, or reader selection in a fourth cell. The third cell is a neighboring cell of the fourth cell in which the terminal device is located, and the fourth cell may belong to the first network device. The third cell may belong to a second network device.

How the first terminal device specifically sends the measurement result is not limited in this application. In an implementation, the first terminal device sends the measurement result to the first network device by using a medium access control (medium access control, MAC) message, for example, a MAC control element (control element) in a random access process, such as an RN16 message. The measurement result is sent by using the MAC message, so that the network device can obtain the interference measurement result without depending on RRC establishment, to help the network device complete resource scheduling.

In an implementation, the first terminal device sends the measurement result to the first network device by using a radio resource control (radio resource control, RRC) message. For example, the measurement result may be reported to the network device along with uplink data, or may be reported based on a trigger message of the network device.

S702: The first network device determines at least one resource based on the measurement result.

How the first network device specifically determines the at least one resource is not limited in this application. In a possible implementation, if it is determined, based on the measurement result, that the at least one reference signal causes no interference to the first terminal device, a resource allocated by the first network device to a terminal device in the fourth cell may be the same as a resource used by a terminal device in the third cell. In this case, the at least one resource may be a resource shared by the first network device and the second network device corresponding to the third cell, or the at least one resource can be used by the first network device and can be used by the second network device. In this case, the resource allocated by the first network device to the terminal device in the fourth cell may alternatively be different from the resource used by the terminal device in the third cell. This is not limited in this application.

In another possible implementation, if it is determined, based on the measurement result, that the at least one reference signal causes interference to the first terminal device, a resource allocated by the first network device to a terminal device in the fourth cell cannot be the same as a resource used by a terminal device in the third cell, or a resource allocated by the first network device to a terminal device in the fourth cell is orthogonal to a resource used by a terminal device in the third cell. In this case, the at least one resource determined by the first network device is orthogonal to a resource configured by the second network device, or the at least one resource is a resource different from a resource configured by the second network device.

S703: The first network device sends resource indication information to the second terminal device. Correspondingly, the second terminal device receives the resource indication information from the first network device.

The resource indication information indicates a third resource, and the third resource is a resource in the at least one resource.

The second terminal device may communicate with a tag device by using the third resource. A specific process is not described again.

In a process of performing cell selection, cell reselection, or reader selection, the first terminal device needs to measure a reference signal, and select a cell, reselect a cell, or select a reader based on a measurement result. Therefore, in this application, the first terminal device sends, to the first network device, the measurement result obtained in the cell selection, cell reselection, or reader selection process, so that the measurement result obtained by the first terminal device can be fully used. One measurement result may be used by the first terminal device to perform cell selection, cell reselection, or reader selection, and may be used by the first network device to perform resource selection, so that the first network device determines an interference status in the third cell in advance based on the measurement result, so as to allocate a resource to the second terminal device, thereby improving system efficiency.

The foregoing mainly describes the solutions provided in embodiments of this application from a perspective of interaction between communication apparatuses. It may be understood that, to implement the foregoing functions, the network device and the terminal device may include corresponding hardware structures and/or software modules for performing the functions. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional units may be performed on the network device and the terminal device based on the foregoing method examples. For example, division into each functional unit may be based on each corresponding function, or two or more functions may be integrated into one unit. The integrated unit may be implemented in a form of hardware, or may be implemented in a form of a software functional unit.

Same as the foregoing concept, as shown in FIG. 8, an embodiment of this application further provides a communication apparatus 800, configured to implement functions of the network device and the terminal device in the foregoing methods. For example, the communication apparatus may be a software module or a chip system. In this embodiment of this application, the chip system may include a chip, or may include a chip and another discrete component. The communication apparatus 800 may include a processing unit 801 and a communication unit 802.

In this embodiment of this application, the communication unit may also be referred to as a transceiver unit, and may include a sending unit and/or a receiving unit, which are respectively configured to perform sending and receiving steps performed by the communication device or the terminal device in the foregoing method embodiments.

The communication apparatus provided in embodiments of this application is described below in detail with reference to FIG. 8 and FIG. 9. It should be understood that descriptions of apparatus embodiments correspond to the descriptions of the method embodiments. Therefore, for content that is not described in detail, refer to the foregoing method embodiments. For brevity, details are not described herein again.

The communication unit may also be referred to as a transceiver, a transceiver machine, a transceiver apparatus, or the like. The processing unit may also be referred to as a processor, a processing board, a processing module, a processing apparatus, or the like. Optionally, a component that is in the communication unit 802 and that is configured to implement a receiving function may be considered as a receiving unit, and a component that is in the communication unit 802 and that is configured to implement a sending function may be considered as a sending unit. In other words, the communication unit 802 includes the receiving unit and the sending unit. The communication unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

In an implementation, the communication apparatus is configured to implement the following functions:
The processing unit is configured to send at least one reference signal to a second network device through a communication unit.

The processing unit is configured to receive a measurement result from the second network device through the communication unit, where the measurement result is determined based on the at least one reference signal, the measurement result is used to determine at least one resource, and the at least one resource is a resource for communication between the first network device and at least one terminal device.

In an implementation, the communication apparatus is configured to implement the following functions:
The processing unit is configured to receive a measurement result from a first terminal device through a communication unit, where the measurement result is used to determine at least one resource, the measurement result is determined based on at least one reference signal from a second terminal device, the first terminal device is located in a first cell of the third network device, and the second terminal device is located in a second cell of a fourth network device.

The processing unit is configured to send resource indication information to the first terminal device through the communication unit, where the resource indication information indicates a second resource, and the second resource is in the at least one resource.

In an implementation, the communication apparatus is configured to implement the following functions:
The processing unit is configured to measure at least one reference signal from a second terminal device, to obtain a measurement result, where the measurement result is used to determine at least one resource.

The communication unit is configured to: send the measurement result to the third network device, where a first terminal device is located in a first cell of the third network device, and the second terminal device is located in a second cell of a fourth network device; and receive resource indication information from the third network device, where the resource indication information indicates a second resource, and the second resource is in the at least one resource.

In an implementation, the communication apparatus is configured to implement the following functions:
The processing unit is configured to determine a measurement result, where the measurement result is obtained by measuring at least one reference signal in a third cell, the third cell is a neighboring cell of a fourth cell in which the first terminal device is located, and the measurement result is used to determine at least one resource.

The communication unit is configured to send the measurement result to a network device.

In an implementation, the communication apparatus is configured to implement the following functions:

The processing unit is configured to receive a measurement result from a first terminal device through a communication unit, where the measurement result is obtained by measuring at least one reference signal in a third cell, the third cell is a neighboring cell of a fourth cell in which the first terminal device is located, and the measurement result is used to determine at least one resource.

The processing unit is configured to send resource indication information to a second terminal device through the communication unit, where the resource indication information indicates a third resource, and the third resource is a resource in the at least one resource.

The foregoing is merely an example. The processing unit 801 and the communication unit 802 may further perform other functions. For more detailed descriptions, refer to the related descriptions in the foregoing method embodiments. Details are not described herein again.

FIG. 9 shows a communication apparatus 900 according to an embodiment of this application. The communication apparatus shown in FIG. 9 may be an implementation of a hardware circuit of the communication apparatus shown in FIG. 8. The communication apparatus is applicable to the foregoing flowcharts, and performs functions of the network device and the terminal device in the foregoing method embodiments. For ease of description, FIG. 9 shows only main components of the communication apparatus.

As shown in FIG. 9, the communication apparatus 900 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to: store instructions executed by the processor 910, or store input data required for running instructions by the processor 910, or store data generated after the processor 910 runs instructions.

When the communication apparatus 900 is configured to implement the method shown above, the processor 910 is configured to implement a function of the processing unit 801, and the interface circuit 920 is configured to implement a function of the communication unit 802.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor or the like.

In embodiments of this application, the processor may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or a storage medium in any other form well-known in the art. An example storage medium is coupled to a processor, so that the processor can read information from the storage medium and can write information into the storage medium. Certainly, the storage medium may alternatively be a part of the processor. The processor and the storage medium may be located in an ASIC. In addition, the ASIC may be located in a network device or a terminal device. The processor and the storage medium may exist in the network device or the terminal device as discrete components.

An embodiment of this application further provides a communication method, including the method completed by the first network device in FIG. 5.

An embodiment of this application further provides a communication method, including the method completed by the third network device in FIG. 6.

An embodiment of this application further provides a communication method, including the method completed by the first terminal device in FIG. 6.

An embodiment of this application further provides a communication method, including the method completed by the network device in FIG. 7.

An embodiment of this application further provides a communication method, including the method completed by the first terminal device in FIG. 7.

An embodiment of this application further provides a computer-readable storage medium, configured to store a computer program. The computer program includes computer instructions used to implement the method performed by the first network device in the foregoing method embodiments, and/or the computer program includes computer instructions used to implement the method performed by the first terminal device in the foregoing method embodiments, and/or the computer program includes computer instructions used to implement the method performed by the third terminal device in the foregoing method embodiments.

An embodiment of this application further provides a computer program product including computer program code. When the computer program code is executed by a computer, the computer is enabled to implement the method performed by the first terminal device in the foregoing method embodiments, and/or when the computer program code is executed by a computer, the computer is enabled to implement the method performed by the first network device in the foregoing method embodiments, and/or when the computer program code is executed by a computer, the computer is enabled to implement the method performed by the third network device in the foregoing method embodiments.

An embodiment of this application further provides a chip apparatus, including a processor. The processor is configured to invoke a computer program or computer instructions stored in a memory, so that the processor performs the methods shown in FIG. 5 and/or FIG. 6 and/or FIG. 7.

Optionally, the processor is coupled to the memory through an interface.

Optionally, the chip apparatus further includes the memory. The memory stores the computer program or the computer instructions.

An embodiment of this application further provides a communication system, including a communication apparatus configured to implement a function of the first terminal device in the embodiment in FIG. 6 and a communication apparatus configured to implement a function of the third network device in the embodiment in FIG. 6.

An embodiment of this application further provides a communication system, including a communication apparatus configured to implement a function of the first terminal device in the embodiment in FIG. 7 and a communication apparatus configured to implement a function of the network device in the embodiment in FIG. 7.

A person skilled in the art should understand that embodiments of this application may be provided as a method, a system, or a computer program product. Therefore, this application may be in a form of a hardware-only embodiment, a software-only embodiment, or an embodiment combining software and hardware aspects. In addition, this application may be in a form of a computer program product implemented on one or more computer-usable storage media (including but not limited to a magnetic disk memory, an optical memory, and the like) including computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art may make various modifications and variations to this application without departing from the scope of this application. Thus, this application is intended to cover these modifications and variations, provided that they fall within the scope of the claims of this application and their equivalent technologies.

## Claims

1. A communication method, comprising:
sending at least one reference signal to a second network device; and
receiving a measurement result from the second network device, wherein the measurement result is determined based on the at least one reference signal, the measurement result is used to determine at least one resource, and the at least one resource is a resource for communication between a first network device and at least one terminal device.

2. The method according to claim 1, wherein the reference signal is a beacon beacon signal.

3. The method according to claim 1 or 2, wherein the terminal device is a passive device, a semi-active device, or an active device with limited energy storage.

4. The method according to any one of claims 1 to 3, wherein the method further comprises:
sending first configuration information to the second network device, wherein the first configuration information comprises at least one of the following information:
start time of the reference signal;
a period of the reference signal;
duration of the reference signal; and
a frequency of the reference signal.

5. The method according to any one of claims 1 to 4, wherein that the at least one reference signal causes no interference to the second network device is determined based on the measurement result, and the at least one resource is a resource shared by the first network device and the second network device; or
that the at least one reference signal causes interference to the second network device is determined based on the measurement result, and the at least one resource is orthogonal to a resource configured by the second network device.

6. The method according to any one of claims 1 to 5, wherein the method further comprises:
sending a first message to a first terminal device through a first resource, wherein the first resource is a resource in the at least one resource, and the first terminal device is a device in the at least one terminal device.

7. The method according to claim 6, wherein the first message is at least one piece of signaling for performing inventory, positioning, sensing reporting, or target search on the first terminal device.

8. A communication method, comprising:
receiving a measurement result from a first terminal device, wherein the measurement result is used to determine at least one resource, the measurement result is determined based on at least one reference signal from a second terminal device, the first terminal device is located in a first cell of the third network device, and the second terminal device is located in a second cell of a fourth network device; and
sending resource indication information to the first terminal device, wherein the resource indication information indicates a second resource, and the second resource is in the at least one resource.

9. The method according to claim 8, wherein the second resource is used for communication between the first terminal device and a tag device.

10. The method according to claim 8 or 9, wherein the reference signal is a beacon beacon signal.

11. The method according to any one of claims 8 to 10, wherein the method further comprises:
receiving first information of the reference signal from the fourth network device; and
sending the first information to the first terminal device, wherein the first information comprises at least one of the following information:
an identifier of the second terminal device;
start time of the reference signal;
a period of the reference signal;
duration of the reference signal; and
a frequency of the reference signal.

12. The method according to any one of claims 8 to 11, wherein the method further comprises:
sending second information to the first terminal device, wherein the second information comprises at least one of the following information:
identification information of the second terminal device;
measurement start indication information, wherein the measurement start indication information indicates the first terminal device to start to measure the reference signal;
measurement time information, wherein the measurement time information indicates at least one of start time, end time, and duration of measuring the reference signal; and
measurement frequency information, wherein the measurement frequency information indicates a sending frequency of the reference signal.

13. The method according to any one of claims 8 to 12, wherein the method further comprises:
sending third information to the first terminal device, wherein the third information comprises at least one of the following: a reporting condition of the measurement result;
a reporting period of the measurement result;
a measurement quantity of the measurement result;
the identification information of the second terminal device; and
a quantity of reference signals corresponding to the measurement result.

14. The method according to any one of claims 8 to 13, wherein that the at least one reference signal causes no interference to the first terminal device is determined based on the measurement result, and the at least one resource is a resource shared by the third network device and the fourth network device; or
that the at least one reference signal causes interference to the first terminal device is determined based on the measurement result, and the at least one resource is orthogonal to a resource configured by the fourth network device for a terminal device in the second cell.

15. A communication method, comprising:
measuring at least one reference signal from a second terminal device, to obtain a measurement result, wherein the measurement result is used to determine at least one resource;
sending the measurement result to the third network device, wherein a first terminal device is located in a first cell of the third network device, and the second terminal device is located in a second cell of a fourth network device; and
receiving resource indication information from the third network device, wherein the resource indication information indicates a second resource, and the second resource is in the at least one resource.

16. The method according to claim 15, wherein the second resource is used for communication between the first terminal device and a tag device.

17. The method according to claim 15 or 16, wherein the second resource is used to carry first signaling, and the first signaling is at least one piece of signaling used for inventory, positioning, sensing reporting, or target search.

18. The method according to any one of claims 15 to 17, wherein the method further comprises:
receiving first information from the third network device, wherein the first information comprises at least one of the following information: an identifier of the second terminal device, start time of the reference signal, a period of the reference signal, duration of the reference signal, and a frequency of the reference signal.

19. The method according to any one of claims 15 to 18, wherein the method further comprises:
receiving second information from the third network device, wherein the second information comprises at least one of the following information: identification information of the second terminal device; measurement start indication information, wherein the measurement start indication information indicates the first terminal device to start to measure a reference signal between terminal devices; and measurement time information, wherein the measurement time information indicates at least one of start time, end time, and duration of measuring the reference signal.

20. The method according to any one of claims 15 to 19, wherein the method further comprises:
receiving third information from the third network device, wherein the third information comprises at least one of the following: a reporting condition of the measurement result; a reporting period of the measurement result; a measurement quantity of the measurement result; the identification information of the second terminal device; and a quantity of reference signals corresponding to the measurement result.

21. The method according to any one of claims 15 to 20, wherein when that the at least one reference signal causes no interference to the first terminal device is determined based on the measurement result, the at least one resource is a resource shared by the third network device and the fourth network device; or
when that the at least one reference signal causes interference to the first terminal device is determined based on the measurement result, the at least one resource is orthogonal to a resource configured by the fourth network device for a terminal device in the second cell.

22. A communication method, comprising:
determining a measurement result, wherein the measurement result is obtained by measuring at least one reference signal in a third cell, the third cell is a neighboring cell of a fourth cell in which the first terminal device is located, and the measurement result is used to determine at least one resource; and
sending the measurement result to a network device.

23. The method according to claim 22, wherein the measurement result is obtained by the first terminal device by measuring the at least one reference signal in the third cell in a process of performing cell selection, cell reselection, or reader selection in the fourth cell.

24. The method according to claim 22 or 23, wherein sending the measurement result to the network device comprises:
sending the measurement result to the network device by using a medium access control MAC message; or sending the measurement result to the network device by using a radio resource control RRC message.

25. A communication method, comprising:
receiving a measurement result from a first terminal device, wherein the measurement result is obtained by measuring at least one reference signal in a third cell, the third cell is a neighboring cell of a fourth cell in which the first terminal device is located, and the measurement result is used to determine at least one resource; and
sending resource indication information to a second terminal device, wherein the resource indication information indicates a third resource, and the third resource is a resource in the at least one resource.

26. The method according to claim 25, wherein the measurement result is obtained by the first terminal device by measuring the at least one reference signal in the third cell in a process of completing cell selection, cell reselection, or reader selection in the fourth cell.

27. A communication apparatus, comprising:
a processing unit, configured to send at least one reference signal to a second network device through a communication unit, wherein
the processing unit is configured to receive a measurement result from the second network device through the communication unit, wherein the measurement result is determined based on the at least one reference signal, the measurement result is used to determine at least one resource, and the at least one resource is a resource for communication between the first network device and at least one terminal device.

28. The apparatus according to claim 27, wherein the reference signal is a beacon beacon signal.

29. The apparatus according to claim 27 or 28, wherein the terminal device is a passive device, a semi-active device, or an active device with limited energy storage.

30. The apparatus according to any one of claims 27 to 29, wherein the communication unit is further configured to:
send first configuration information to the second network device, wherein the first configuration information comprises at least one of the following information:
start time of the reference signal;
a period of the reference signal;
duration of the reference signal; and
a frequency of the reference signal.

31. The apparatus according to any one of claims 27 to 30, wherein that the at least one reference signal causes no interference to the second network device is determined based on the measurement result, and the at least one resource is a resource shared by the first network device and the second network device; or
that the at least one reference signal causes interference to the second network device is determined based on the measurement result, and the at least one resource is orthogonal to a resource configured by the second network device.

32. The apparatus according to any one of claims 27 to 31, wherein the communication unit is further configured to:
send a first message to a first terminal device through a first resource, wherein the first resource is a resource in the at least one resource, and the first terminal device is a device in the at least one terminal device.

33. The apparatus according to claim 32, wherein the first message is at least one piece of signaling used for inventory, positioning, sensing reporting, or target search.

34. A communication apparatus, comprising:
a processing unit, configured to receive a measurement result from a first terminal device through a communication unit, wherein the measurement result is used to determine at least one resource, the measurement result is determined based on at least one reference signal from a second terminal device, the first terminal device is located in a first cell of the third network device, and the second terminal device is located in a second cell of a fourth network device, wherein
the processing unit is configured to send resource indication information to the first terminal device through the communication unit, wherein the resource indication information indicates a second resource, and the second resource is in the at least one resource.

35. The apparatus according to claim 34, wherein the second resource is used for communication between the first terminal device and a tag device.

36. The apparatus according to claim 34 or 35, wherein the reference signal is a beacon beacon signal.

37. The apparatus according to any one of claims 34 to 36, wherein the communication unit is further configured to:
receive first information of the reference signal from the fourth network device; and
send, by the third network device, the first information to the first terminal device, wherein the first information comprises at least one of the following information:
an identifier of the second terminal device;
start time of the reference signal;
a period of the reference signal;
duration of the reference signal; and
a frequency of the reference signal.

38. The apparatus according to any one of claims 34 to 37, wherein the communication unit is further configured to:
send second information to the first terminal device, wherein the second information comprises at least one of the following information:
identification information of the second terminal device;
measurement start indication information, wherein the measurement start indication information indicates the first terminal device to start to measure the reference signal;
measurement time information, wherein the measurement time information indicates at least one of start time, end time, and duration of measuring the reference signal; and
measurement frequency information, wherein the measurement frequency information indicates a sending frequency of the reference signal.

39. The apparatus according to any one of claims 34 to 38, wherein the communication unit is further configured to:
send third information to the first terminal device, wherein the third information comprises at least one of the following: a reporting condition of the measurement result;
a reporting period of the measurement result;
a measurement quantity of the measurement result;
the identification information of the second terminal device; and
a quantity of reference signals corresponding to the measurement result.

40. The apparatus according to any one of claims 34 to 39, wherein that the at least one reference signal causes no interference to the first terminal device is determined based on the measurement result, and the at least one resource is a resource shared by the third network device and the fourth network device; or
that the at least one reference signal causes interference to the first terminal device is determined based on the measurement result, and the at least one resource is orthogonal to a resource configured by the fourth network device for a terminal device in the second cell.

41. A communication apparatus, comprising:
a processing unit, configured to measure at least one reference signal from a second terminal device, to obtain a measurement result, wherein the measurement result is used to determine at least one resource; and
a communication unit, configured to: send the measurement result to the third network device, wherein a first terminal device is located in a first cell of the third network device, and the second terminal device is located in a second cell of a fourth network device; and receive resource indication information from the third network device, wherein the resource indication information indicates a second resource, and the second resource is in the at least one resource.

42. The apparatus according to claim 41, wherein the second resource is used for communication between the first terminal device and a tag device.

43. The apparatus according to claim 41 or 42, wherein the second resource is used to carry first signaling, and the first signaling is at least one piece of signaling used for inventory, positioning, sensing reporting, or target search.

44. The apparatus according to any one of claims 41 to 43, wherein the communication unit is further configured to:
receive first information from the third network device, wherein the first information comprises at least one of the following information: an identifier of the second terminal device, start time of the reference signal, a period of the reference signal, duration of the reference signal, and a frequency of the reference signal.

45. The apparatus according to any one of claims 41 to 44, wherein the apparatus further comprises:
receiving second information from the third network device, wherein the second information comprises at least one of the following information: identification information of the second terminal device; measurement start indication information, wherein the measurement start indication information indicates the first terminal device to start to measure a reference signal between terminal devices; and measurement time information, wherein the measurement time information indicates at least one of start time, end time, and duration of measuring the reference signal.

46. The apparatus according to any one of claims 41 to 45, wherein the communication unit is further configured to:
receive third information from the third network device, wherein the third information comprises at least one of the following: a reporting condition of the measurement result; a reporting period of the measurement result; a measurement quantity of the measurement result; the identification information of the second terminal device; and a quantity of reference signals corresponding to the measurement result.

47. The apparatus according to any one of claims 41 to 46, wherein when that the at least one reference signal causes no interference to the first terminal device is determined based on the measurement result, the at least one resource is a resource shared by the third network device and the fourth network device; or
when that the at least one reference signal causes interference to the first terminal device is determined based on the measurement result, the at least one resource is orthogonal to a resource configured by the fourth network device for a terminal device in the second cell.

48. A communication apparatus, comprising:
a processing unit, configured to determine a measurement result, wherein the measurement result is obtained by measuring at least one reference signal in a third cell, the third cell is a neighboring cell of a fourth cell in which the first terminal device is located, and the measurement result is used to determine at least one resource; and
a communication unit, configured to send the measurement result to a network device.

49. The apparatus according to claim 48, wherein the measurement result is obtained by the first terminal device by measuring the at least one reference signal in the third cell in a process of performing cell selection, cell reselection, or reader selection in the fourth cell.

50. The apparatus according to claim 48 or 49, wherein the communication unit is specifically configured to:
send the measurement result to the network device by using a medium access control MAC message; or send the measurement result to the network device by using a radio resource control RRC message.

51. A communication apparatus, comprising:
a processing unit, configured to receive a measurement result from a first terminal device through a communication unit, wherein the measurement result is obtained by measuring at least one reference signal in a third cell, the third cell is a neighboring cell of a fourth cell in which the first terminal device is located, and the measurement result is used to determine at least one resource, wherein
the processing unit is configured to send resource indication information to a second terminal device through the communication unit, wherein the resource indication information indicates a third resource, and the third resource is a resource in the at least one resource.

52. The apparatus according to claim 51, wherein the measurement result is obtained by the first terminal device by measuring the at least one reference signal in the third cell in a process of completing cell selection, cell reselection, or reader selection in the fourth cell.

53. A communications apparatus, comprising a processor and a memory, wherein
the processor is configured to execute a computer program or instructions stored in the memory, to enable the communication apparatus to implement the method according to any one of claims 1 to 26.

54. A computer-readable storage medium, storing a computer program or instructions, wherein when the computer program or the instructions are run on a computer, the computer is enabled to implement the method according to any one of claims 1 to 26.

55. A chip, comprising a processor, wherein the processor is coupled to a memory, and is configured to execute a computer program or instructions stored in the memory, to enable the chip to implement the method according to any one of claims 1 to 26.

56. A computer program product, storing computer-readable instructions, wherein when a communication apparatus reads and executes the computer-readable instructions, the communication apparatus is enabled to perform the method according to any one of claims 1 to 26.
